# EUROPEAN PATENT SPECIFICATION

(11) **EP 4 019 110 B1**
(45) Date of publication and mention of the grant of the patent: **25.09.2024**
(21) Application number: 20881965.6
(22) Date of filing: 21.10.2020
(51) Int. Cl.: B01D 35/16, B01D 35/157, B01D 37/04, B01D 61/02, C02F 1/44

(54) **WATER PURIFIER**
WASSERREINIGER
PURIFICATEUR D'EAU

(30) Priority: 29.10.2019 KR 20190135743
(43) Date of publication of application: 29.06.2022
(73) Proprietor: Coway Co., Ltd., Gongju-si, Chungcheongnam-do 32508 (KR)
(72) Inventor: MOON, Hyoung-Min, Seoul 08800 (KR); KIM, Chul-Ho, Seoul 08800 (KR); HONG, Young-Hoon, Seoul 08800 (KR); PARK, Si-Jun, Seoul 08800 (KR); SHIN, Hyun-Soo, Seoul 08800 (KR)
(74) Representative: BCKIP Part mbB
(86) International application number: PCT/KR2020/014408
(87) International publication number: WO 2021/085924

(56) References cited:
- WO-A1-2012/124360
- CN-A- 107 952 368
- KR-A- 20170 105 940
- KR-A- 20170 116 808
- KR-A- 20180 076 121
- KR-A- 20180 125 023
- US-A1- 2004 168 978
- US-A1- 2005 205 478
- US-A1- 2014 110 337
- US-A1- 2014 262 989

## Description

### Technical Field

The present disclosure relates to a water purifier.

### Background Art

The water purifier may filter water and may supply water to a user.

The water purifier may include a reverse osmosis filter to filter water. The reverse osmosis filter may include a reverse osmosis membrane for filtering water such that the reverse osmosis filter may be partitioned into a non-filtration side and a filtration side.

Some of water flowing into the non-filtration side of the reverse osmosis filter may be filtered while passing through the reverse osmosis membrane, and the remaining water may not pass through the reverse osmosis membrane. Water filtered while passing through the reverse osmosis membrane may flow to the filtration side, may flow through a connection line connected to the filtration side and may be discharged through a water outlet member connected to the connection line. The residential water, which is water not passing through the reverse osmosis membrane, may flow through the residential water line connected to the non-filtration side and may be drained.

Meanwhile, after the filtration of water in the reverse osmosis filter is in progress or immediately after the filtration of water is stopped, there may be a difference in total dissolved solid (TDS) concentrations of the non-filtration side and the filtration side of the reverse osmosis filter. That is, the concentration of TDS on the non-filtration side of the reverse osmosis filter may be higher than the concentration of TDS on the filtration side. However, when water filtration is not performed for more than a predetermined time after the water filtration in the reverse osmosis filter stops, water on the non-filtration side may pass through the reverse osmosis membrane due to the difference in concentration of TDSs between the non-filtration side and the filtration side of the reverse osmosis filter and may flow to the filtration side. Accordingly, the concentration of TDSs of the non-filtration side and the filtration side of the reverse osmosis filter may become the same, which may be known as a creepage phenomenon.

After the filtration of water in the reverse osmosis filter is not performed for more than a predetermined time, the filtration of water may be performed in the reverse osmosis filter, and the initially discharged water may have a high concentration of TDS due to the creepage phenomenon described above. Accordingly, after filtration of water is not performed in the reverse osmosis filter for a predetermined time or more, when the water is filtered in the reverse osmosis filter, water having a high concentration of TDS may be initially supplied to a user.

CN 107952368 A discloses a water purifying machine. The machine comprises a reverse osmosis membrane filter, a pressure barrel, a water purifying bypass way and a flushing solenoid valve; the water purifying bypass way is provided with a first solenoid valve and a first one-way valve, one end of the water purifying bypass way is connected with an outlet of the pressure barrel, and the other end is connected with a raw-water inlet of the reverse osmosis membrane filter; and the flushing solenoid valve is arranged on a pipeline of a wastewater outlet of the reverse osmosis membrane filter.

### Summary of Invention

### Technical Problem

The present disclosure has been made in recognition of at least one of the needs or problems occurring in the prior art as described above.

One aspect of the purpose of the present disclosure is to provide water having a relatively low concentration of TDS to a user.

Another aspect of the present disclosure is to flush the filtration side of a reverse osmosis filter before water filtered by the filter unit is discharged through a water outlet member, and to flush the non-filtration side of the reverse osmosis filter after the water filtered by the filter unit is discharged through the water outlet member.

### Solution to Problem

A method of controlling a water purifier according to the present invention addressing the above mentioned problems is subject of the independent claim 1. Refinements to said method are subject of the dependent claims.

A corresponding water purifier according to an embodiment for implementing at least one of the problems may include the following features.

The water purifier according to an embodiment of the present disclosure includes a filter unit including a reverse osmosis filter; a water outlet unit including a water outlet member connected to the filter unit; and a control unit for discharging water filtered by the filter unit to the outside through the water outlet member, wherein the reverse osmosis filter includes a reverse osmosis membrane for filtering water such that the reverse osmosis filter is partitioned into a non-filtration side and a filtration side, and wherein the control unit allows the filtration side to be flushed before water filtered by the filter unit is discharged through the water outlet member, and the control unit allows the non-filtration side to be flushed after water filtered by the filter unit is discharged through the water outlet member.

The control unit may allow the filtration side to be flushed for a predetermined time.

The control unit may allow the non-filtration side to be flushed in response to the time for which water filtered by the filter unit is discharged through the water outlet member or the amount of the water.

The non-filtration side may be connected to a water inlet valve connected to the control unit, a water inlet line including a water inlet pump, and a residential water line including a residential water valve, and the filtration side may include a water outlet valve connected to the control unit and may be connected to the water outlet member.

The water outlet line may be connected to a first flushing line including a first flushing valve connected to the control unit, and the residential water line may be connected to a second flushing line including a second flushing valve connected to the control unit.

The control unit may open the water inlet valve, and while the control unit drives the water pump, the control unit may open the first flushing valve for a predetermined time, and thereafter, the control unit may close the first flushing valve and may open the water outlet valve.

The control unit may open the first flushing valve for at least 5 seconds.

The control unit may close the water outlet valve and then may open the second flushing valve.

The control unit may open the second flushing valve in response to the time for which the water outlet valve is opened or the amount of water discharged through the water outlet member and then may close the second flushing valve.

The control unit may close the second flushing valve, and thereafter, the control unit may close the water inlet valve and may stop the driving of the water inlet pump.

The residential water line may include a shut-off valve connected to the control unit, and the control unit closes the shut-off valve when the first flushing valve is opened.

### Advantageous Effects of Invention

As described above, according to an embodiment of the present disclosure, the filtration side of the reverse osmosis filter is flushed before the water filtered by the filter unit is discharged through the water outlet member, and the water filtered by the filter unit is discharged through the water outlet member. The non-filtration side of the reverse osmosis filter may be flushed after being discharged through the water outlet member.

Also, according to an embodiment of the present disclosure, water having a relatively low concentration of TDS may be provided to a user.

### Brief Description of Drawings

FIG. 1 is a diagram illustrating a water purifier according to the present disclosure.
FIGS. 2 to 4 are diagrams illustrating an embodiment of operation of a water purifier according to the present disclosure.
FIG. 5 is a graph of concentration of TDS of water flowing in a portion of a water outlet line adjacent to a reverse osmosis filter over time when water is not filtered for 30 minutes and 1200 minutes in the reverse osmosis filter of a conventional water purifier, and is filtered in the reverse osmosis filter thereafter.
FIG. 6 is a graph of a TDS removal rate from a first cup to a fifth cup in the case in which water discharged to the outside through a water outlet member of a water outlet unit is continuously received several times with a cup of the same capacity in a conventional water purifier to which flushing of the filtration side of the reverse osmosis filter is not applied, and a water purifier according to the present disclosure to which flushing of the filtration side of the reverse osmosis filter is applied.
FIG. 7 is a graph of changes in concentration of TDS on the non-filtration side of the reverse osmosis filter over time when water filtered by the reverse osmosis filter is discharged through the water outlet member of the water outlet unit in the water purifier according to the present disclosure, and changes in concentration of TDS on the non-filtration side of the reverse osmosis filter over time when the non-filtration side of the reverse osmosis filter after is flushed after water is discharged through the water outlet member.

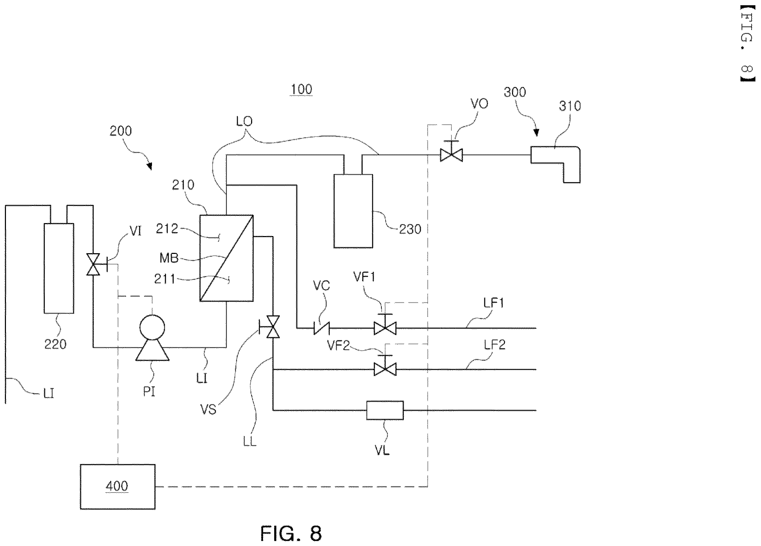

FIG. 8 is a diagram illustrating another embodiment of the water purifier according to the present disclosure.

### Best Mode for Invention

To help the understanding of the features of the present disclosure as described above, it will be described in greater detail below with respect to the water purifier related to the embodiment of the present disclosure.

The embodiments described below will be described based on the most suitable embodiments for understanding the technical features of the present disclosure, and the technical features of the present disclosure are not limited to the described embodiments, and the present disclosure may be implemented as in the embodiments described below. Accordingly, various modifications of the present disclosure may be implemented within the technical scope of the present disclosure through the embodiments described below, and these modified embodiments will fall within the technical scope of the present disclosure. Also, as for the reference characters in the accompanying drawings to help the understanding of the embodiments to be described below, related components among components performing the same operation in each embodiment are indicated by the same or extended reference characters.

### Embodiment of water purifier

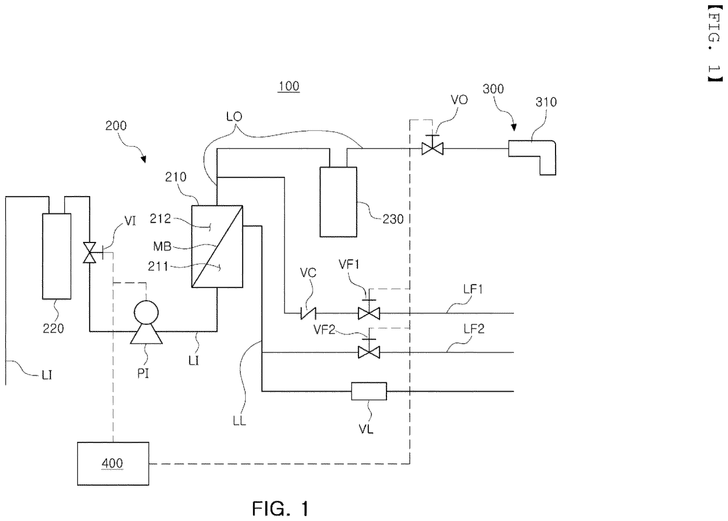

Hereinafter, an embodiment of the water purifier according to the present disclosure will be described with reference to FIGS. 1 to 7.

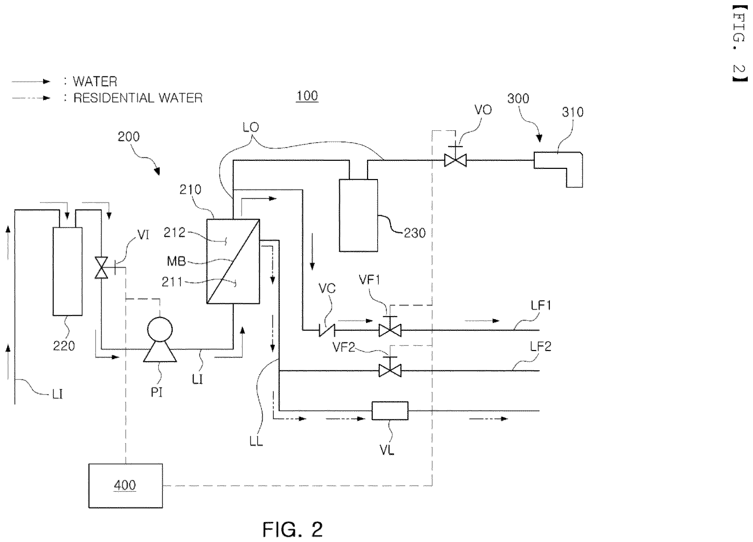

FIG. 1 is a diagram illustrating a water purifier according to the present disclosure. FIGS. 2 to 4 are diagrams illustrating an embodiment of operation of a water purifier according to the present disclosure.

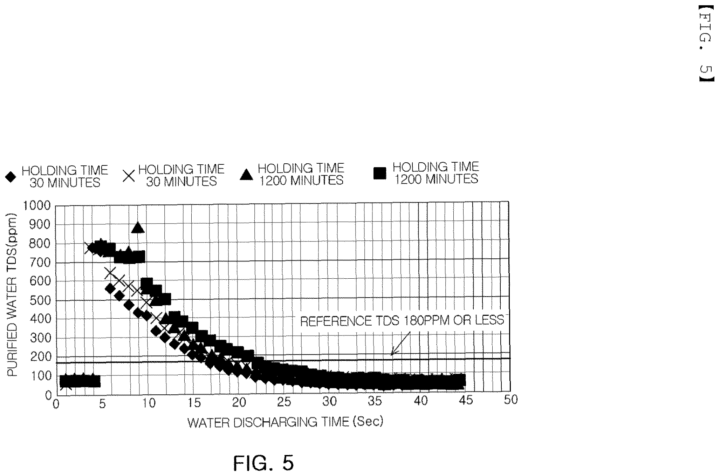

Also, FIG. 5 is a graph of concentration of TDS of water flowing in a portion of a water outlet line adjacent to a reverse osmosis filter over time when water is not filtered for 30 minutes and 1200 minutes in the reverse osmosis filter of a conventional water purifier, and is filtered in the reverse osmosis filter thereafter.

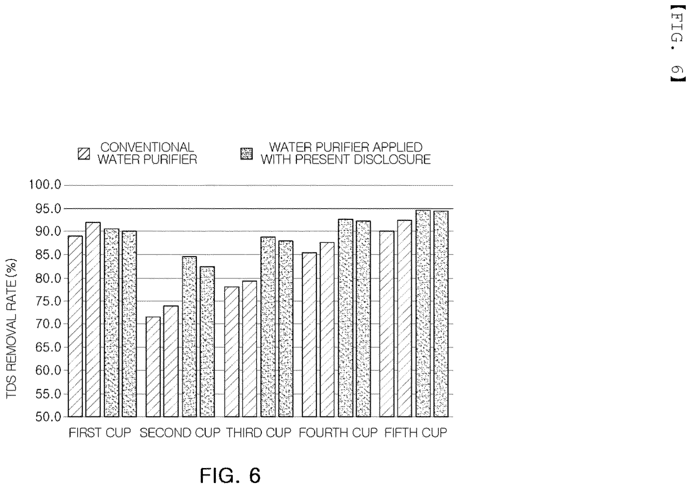

FIG. 6 is a graph of a TDS removal rate from a first cup to a fifth cup in the case in which water discharged to the outside through a water outlet member of a water outlet unit is continuously received several times with a cup of the same capacity in a conventional water purifier to which flushing of the filtration side of the reverse osmosis filter is not applied, and a water purifier according to the present disclosure to which flushing of the filtration side of the reverse osmosis filter is applied.

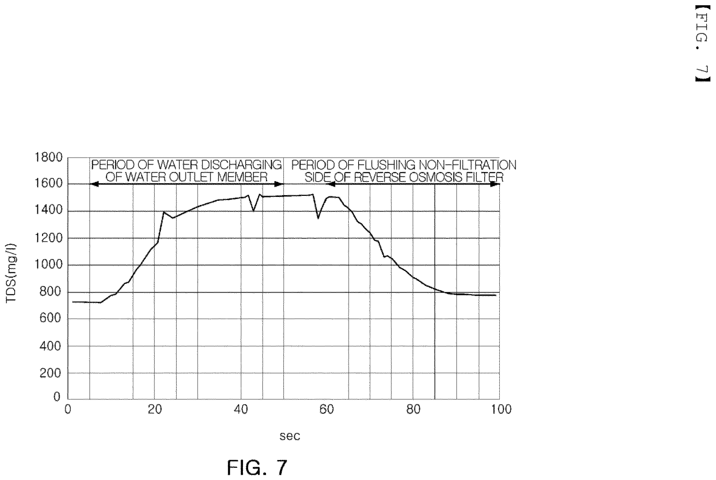

Also, FIG. 7 is a graph of changes in concentration of TDS on the non-filtration side of the reverse osmosis filter over time when water filtered by the reverse osmosis filter is discharged through the water outlet member of the water outlet unit in the water purifier according to the present disclosure, and changes in concentration of TDS on the non-filtration side of the reverse osmosis filter over time when the non-filtration side of the reverse osmosis filter after is flushed after water is discharged through the water outlet member.

An embodiment of the water purifier 100 according to the present disclosure may include a filter unit 200, a water outlet unit 300, and a control unit 400.

The filter unit 200 may include a reverse osmosis filter 210. As illustrated in FIG. 1, the reverse osmosis filter 210 may include a reverse osmosis membrane MB for filtering water. The reverse osmosis filter 210 may be partitioned into a non-filtration side 211 and a filtration side 212 by the reverse osmosis membrane MB.

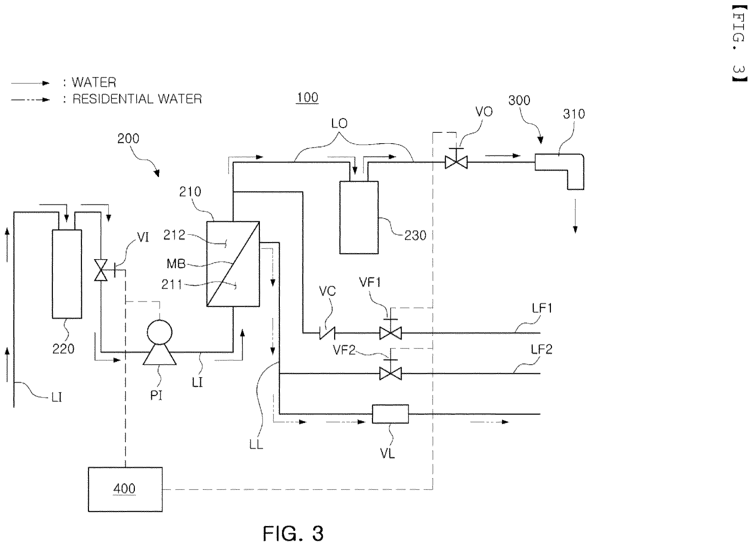

The non-filtration side 211 of the reverse osmosis filter 210 may be connected to the water inlet line LI as illustrated in FIG. 1. The water inlet line LI may include a water inlet valve VI and a water inlet pump PI. The water inlet line LI may be connected to a water supply source (not illustrated) such as tap water. Accordingly, when the water inlet valve VI is opened and the water inlet pump PI is driven, water from the water supply source may flow through the water inlet line LI and may flow into the filtration side 211 of the reverse osmosis filter 210 as illustrated in FIGS. 2 to 4. As illustrated in FIGS. 2 and 3, some of the water flowing into the non-filtration side 211 of the reverse osmosis filter 210 may be filtered while passing through the reverse osmosis membrane MB and may flow to the filtration side 212, and the remaining water may not pass through the reverse osmosis membrane MB. Meanwhile, a second flushing valve VF2 may be provided in a second flushing line LF2 connected to a residential water line LL, described later, connected to the non-filtration side 211 of the reverse osmosis filter 210. When the second flushing valve VF2 is opened, a predetermined filtration pressure may not be formed on the non-filtration side 211 of the reverse osmosis filter 210. Accordingly, the entire water flowing into the non-filtration side 211 of the reverse osmosis filter 210 may not pass through the reverse osmosis membrane MB and may flow into the residential water line LL as illustrated in FIG. LF2, and may flow to the second flushing line LF2.

The non-filtration side 211 of the reverse osmosis filter 210 may also be connected to the residential water line LL as illustrated in FIG. 1. The residential water valve VL may be provided in the residential water line LL. The residential water valve VL may allow a predetermined filtration pressure to be formed on the non-filtration side 211 of the reverse osmosis filter 210. Accordingly, water flowing into the non-filtration side 211 of the reverse osmosis filter 210 may be filtered while passing through the reverse osmosis membrane MB and may flow to the filtration side 212. Also, as illustrated in FIGS. 2 and 3, the residential water valve VL may allow the residential water, which may be not be filtered as the water has not been able to pass through the reverse osmosis membrane MB of the reverse osmosis filter 210, to be drained through the residential water line LL. The configuration of the living water valve VL is not particularly limited, and any component which may allow a predetermined filtration pressure to be formed on the non-filtration side 211 of the reverse osmosis filter 210 and may allow the residential water, which may be not be filtered as the water has not been able to pass through the reverse osmosis membrane MB of the reverse osmosis filter 210, to be drained may be used.

As illustrated in FIG. 1, the filtration side 212 of the reverse osmosis filter 210 may be connected to a water outlet line LO. Water flowing into the non-filtration side 211 of the reverse osmosis filter 210, filtered while passing through the reverse osmosis membrane MB, and flowing to the filtration side 212 may flow into the water outlet line LO as illustrated in FIGS. 2 and 3. As illustrated in FIG. 2, when the first flushing valve VF1 provided in a first flushing line LF1, described later, connected to the water outlet line LO is opened, water flowing into the water outlet line LO and filtered by the reverse osmosis filter 210 may flow to the first flushing line LF1. Accordingly, the filtration side 212 of the reverse osmosis filter 210 may be flushed by the water filtered while passing through the reverse osmosis membrane MB. The water outlet line LO may be connected to a water outlet member 310 included in the water outlet unit 300 described later. Also, the water outlet line LO may include a water outlet valve VO. Accordingly, when the water outlet valve VO is opened, the water flowing into the water outlet line LO may flow to the water outlet member 310 through the water outlet line LO and may flow to the outside through the water outlet member 310 as illustrated in FIG. 3.

Meanwhile, as illustrated in FIG. 1, a first flushing line LF1 may be connected to the water outlet line LO. A first flushing valve VF1 may be provided in the first flushing line LF1. When the first flushing valve VF1 is opened, water filtered while passing through the reverse osmosis membrane MB of the reverse osmosis filter 210, flowing to the filtration side 212, and flowing into the water outlet line LO may flow to the first flushing line LF1 as illustrated in FIG. 2. Accordingly, the filtration side 212 of the reverse osmosis filter 210 may be flushed by the water filtered while passing through the reverse osmosis membrane MB. A check valve VC may be provided in the first flushing line LF1. Water may flow from the filtration side 212 of the reverse osmosis filter 210 to the first flushing line LF1 by the check valve VC, but may not flow from the first flushing line LF1 to the filtration side 212 of the reverse osmosis filter 210.

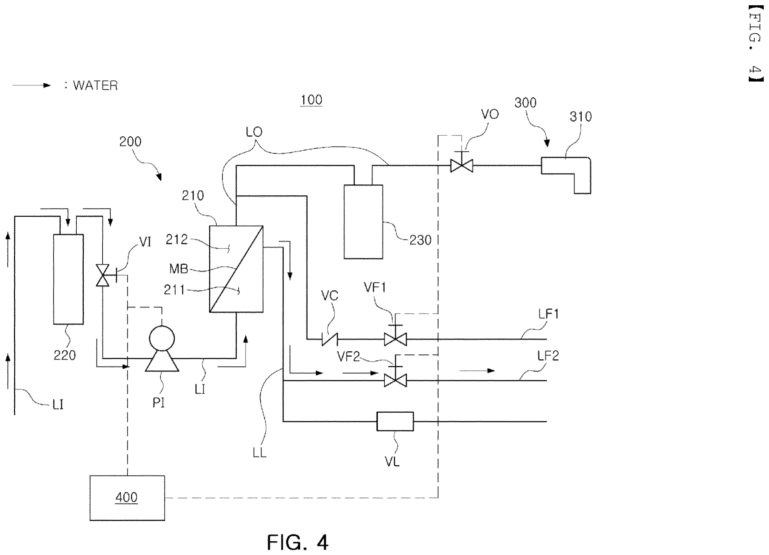

The second flushing line LF2 may be connected to the residential water line LL. The second flushing line LF2 may include a second flushing valve VF2. When the second flushing valve VF2 is opened, as illustrated in FIG. 4, the water flowing into the non-filtration side 211 of the reverse osmosis filter 210 may not pass through the reverse osmosis membrane MB and may flow to the second flushing line LF2 through the residential water line LL. Accordingly, the non-filtration side 211 of the reverse osmosis filter 210 may be flushed by the water flowing into the non-filtration side 211.

The filter unit 200 may further include a pre-treatment filter 220 and a post-treatment filter 230 as illustrated in FIG. 1.

The pre-filter 220 may be connected to the water inlet line LI. For example, the pre-treatment filter 220 may be connected to a portion of the water inlet line LI before the water inlet pump PI and the water inlet valve VI. However, the portion of the water inlet line LI to which the pretreatment filter 220 is connected is not particularly limited, and may be connected to any portion of the water inlet line LI before the reverse osmosis filter 210. When the water inlet valve VI is opened, the water of the water supply source may be filtered by the pre-treatment filter 220 and may flow to the non-filtration side 211 of the reverse osmosis filter 210 as illustrated in FIGS. 2 to 4.

The post-treatment filter 230 may be connected to the water outlet line LO. For example, the post-treatment filter 230 may be connected to a portion of the water outlet line LO between a portion to which the first flushing line LF1 is connected and the water outlet valve VO. Accordingly, as illustrated in FIG. 3, the water filtered by the reverse osmosis filter 210 may be filtered by the post-treatment filter 230 and may flow to the water outlet unit 300 through the water outlet line LO.

The water filter included in the filter unit 200 in addition to the reverse osmosis filter 210 is not limited to the above-described pre-treatment filter 220 and post-treatment filter 230, and any water filter able to filter water may be used. Also, the number of water filters included in the filter unit 200 in addition to the reverse osmosis filter 210 is not particularly limited, and any number of the filters may be provided. Alternatively, only the reverse osmosis filter 210 may be included in the filter unit 200.

The water outlet unit 300 may include a water outlet member 310. The water outlet member 310 may be connected to the filter unit 200. For example, the water outlet member 310 may be connected to the water outlet line LO and may be connected to the filter unit 200 as illustrated in FIG. 1. Accordingly, when the water outlet valve VO of the water outlet line LO is opened, the water filtered by the filter 200 may flow to the water outlet member 310 through the water outlet line LO as illustrated in FIG. 3. Also, the water flowing to the water outlet member 310 may be discharged to the outside through the water outlet member 310 and may be supplied to a user.

The control unit 400 may allow the water filtered by the filter unit 200 to be discharged to the outside through the water outlet member 310.

The control unit 400 may be connected to the water inlet valve VI, the water inlet pump PI, and the water outlet valve VO. Also, the control unit 400 may be connected to the first flushing valve VF1 and the second flushing valve VF2.

When the control unit 400 opens the water inlet valve VI and drives the water inlet pump PI, as illustrated in FIG. 3, the water of the water supply source may flow into the pre-treatment filter 220 of the filter unit 200 through the water inlet line LI and may be filtered. Water filtered by the pre-treatment filter 220 may flow into the non-filtration side 211 of the reverse osmosis filter 210 of the filter unit 200 through the water inlet line LI. Some of the water flowing into the non-filtration side 211 of the reverse osmosis filter 210 may be filtered while passing through the reverse osmosis membrane MB and may flow to the filtration side 212 of the reverse osmosis filter 210. In this state, when the control unit 400 opens the water outlet valve VO, the water filtered while passing through the reverse osmosis membrane MB and flowing to the filtration side 212 of the reverse osmosis filter 210 may flow to the water outlet member 310 of the water outlet unit 300 through the water outlet line LO. The water flowing to the water outlet member 310 of the water outlet unit 300 may be discharged to the outside through the water outlet member 310 and may be supplied to a user.

Meanwhile, as illustrated in FIG. 2, the control unit 400 may allow the filtration side 212 of the reverse osmosis filter 210 of the filter unit 200 to be flushed before the water filtered by the filter unit 200 is discharged through the water outlet member 310 of the water outlet unit 300.

In the case in which filtration of water is not performed for a predetermined time or more in the reverse osmosis filter 210 of the filter unit 200, due to a difference in total dissolved solid (TDS) concentrations between the non-filtration side 211 and the filtration side 212 of the reverse osmosis filter 210, the water on the non-filtration side 211 may pass through the reverse osmosis membrane MB and may flow to the filtration side 212. Accordingly, the concentrations of TDS of the non-filtration side 211 and the filtration side 212 of the reverse osmosis filter 210 may become the same, which may be called a creepage phenomenon. Due to this creepage phenomenon, water having a relatively high concentration of TDS may be present on the filtration side 212 of the reverse osmosis filter 210.

In the present disclosure, as described above, before the water filtered by the filter unit 200 is discharged through the water outlet member 310, as illustrated in FIG. 2, the filtration side 212 of the reverse osmosis filter 210 of the filter unit 200 may be flushed. Accordingly, water having a relatively high concentration of TDS may be prevented on the filtration side 212 of the reverse osmosis filter 210. Accordingly, when water having a relatively high concentration of TDS is not present on the filtration side 212 of the reverse osmosis filter 210, water having a relatively low concentration of TDS may be provided to a user.

The control unit 400 may allow the filtration side 212 of the reverse osmosis filter 210 to be flushed for a predetermined time.

For example, the control unit 400 may open the water inlet valve VI and may drive the water inlet pump PI, and in this state, the control unit 400 may open the first flushing valve VF1 for a predetermined time, and thereafter, the control unit 400 may close the first flushing valve VF1. Also, the control unit 400 may open the water outlet valve VO.

Accordingly, the filtration side 212 of the reverse osmosis filter 210 of the filter unit 200 may be filtered while passing through the reverse osmosis membrane MB and may be flushed for a predetermined time by the water flowing through the filtration side 212. Also, water having a relatively low concentration of TDS may be present on the filtration side 212 of the reverse osmosis filter 210.

In this case, the control unit 400 may open the first flushing valve VF1 for at least 5 seconds or more.

FIG. 5 is a graph of TDS concentration of water flowing in a portion of the water outlet line adjacent to the reverse osmosis filter over time when water is not filtered for 30 minutes and 1200 minutes in the reverse osmosis filter of a conventional water purifier, and is filtered in the reverse osmosis filter thereafter. As illustrated in FIG. 5, in the conventional water purifier, when the filtration is resumed by the reverse osmosis filter 210, the portion of the water outlet line LO adjacent to the reverse osmosis filter 210 may not be affected by the creepage phenomenon, such that water having a relatively low concentration of TDS may flow for about 4 seconds. Thereafter, after 4 seconds, the water having a relatively high concentration of TDS due to the creepage phenomenon, which has been discharged from the filtration side 212 of the reverse osmosis filter 210, may flow through the portion of the water outlet line LO adjacent to the reverse osmosis filter 210. Accordingly, flushing of the filtration side 212 of the reverse osmosis filter 210 may be performed only when the first flushing valve VF1 is opened for at least 5 seconds.

As the filtration side 212 of the reverse osmosis filter 210 is flushed, as illustrated in FIG. 5, the concentration of TDS of the water flowing through the water outlet line LO adjacent to the reverse osmosis filter 210 may gradually decrease. As illustrated in FIG. 5, when the first flushing valve VF1 is opened for about 20 seconds, the concentration of TDS of the water flowing through the water outlet line LO adjacent to the reverse osmosis filter 210 may be lowered to about a reference concentration of TDS. Also, when the first flushing valve VF1 is opened for about 45 seconds, the concentration of TDS may be lowered to a level of the concentration of TDS of water which the creepage phenomenon may not affect. Meanwhile, when the first flushing valve VF1 is opened for more than 1 minute, a relatively large amount of water may be used for flushing the filtration side 212 of the reverse osmosis filter 210. Also, to receive the water filtered by the filter unit 200, a user may have to wait a relatively long time. Accordingly, it may be preferable to allow the filtration side 212 of the reverse osmosis filter 210 to be flushed by opening the first flushing valve VF1 for 5 seconds or more and 1 minute or less.

Meanwhile, the minimum opening time of the first flushing valve VF1 for flushing the filtration side 212 of the reverse osmosis filter 210 may be less than 5 seconds or more than 5 seconds depending on the installation environment of the water purifier 100.

FIG. 6 is a graph of a TDS removal rate from a first cup to a fifth cup in the case in which water discharged to the outside through a water outlet member of a water outlet unit is continuously received several times with a cup of the same capacity in a conventional water purifier to which flushing of the filtration side of the reverse osmosis filter is not applied, and a water purifier according to the present disclosure to which flushing of the filtration side of the reverse osmosis filter is applied.

Here, the TDS removal rate may be represented as below, where the concentration of TDS of the raw water may indicate the concentration of TDS of the water of the water supply source, and the concentration of TDS of the purified water may indicate the concentration of TDS of the water passing through the filter unit 200 and discharged through the water outlet member 310 of the water outlet unit 300. TDS removal rate = (concentration of TDS of raw water - concentration of TDS of purified water) / concentration of TDS of raw water

A relatively high TDS removal rate may indicate that the concentration of TDS of the purified water may be relatively low, and a relatively low TDS removal rate may indicate that the concentration of TDS of the purified water may be relatively high.

As illustrated in FIG. 6, in the case of the conventional water purifier to which the flushing of the filtration side 212 of the reverse osmosis filter 210 is not applied, and the case of the water purifier 100 to which the flushing of the filtration side 212 of the reverse osmosis filter 210 is applied, water having relatively low TDS which was not affected by the creepage phenomenon was put in the first cup through the water outlet member 310 of the water outlet unit 300. Also, water having a relatively high TDS affected by the creepage phenomenon was put in the second glass through the water outlet member 310 of the water outlet unit 300, and the TDS removal rate was the lowest. Also, the concentration of TDS of the water discharged to the outside through the water outlet member 310 of the water outlet unit 300 gradually decreased toward the fifth cup, and the TDS removal rate of the water contained in the glass increased.

In this case, in the case of the conventional water purifier to which flushing of the filtration side 212 of the reverse osmosis filter 210 is not applied, as illustrated in FIG. 6, a difference between the TDS removal rate in the second cup and the TDS removal rate in the fifth cup was relatively large. However, in the case of the water purifier 100 according to the present disclosure to which the flushing of the filtration side 212 of the reverse osmosis filter 210 is applied, the difference between the TDS removal rate in the second cup and the TDS removal rate in the fifth cup was relatively small. Accordingly, it is indicated that the water purifier 100 according to the present disclosure to which the flushing of the filtration side 212 of the reverse osmosis filter 210 is applied may provide water having a relatively low concentration of TDS to a user as compared to the conventional water purifier to which the flushing of the filtration side 212 of the reverse osmosis filter 210 is not applied.

Meanwhile, the control unit 400 may allow the water filtered by the filter unit 200 to be discharged through the water outlet member 310 of the water outlet unit 300 and may allow the non-filtration side 211 of the reverse osmosis filter 210 to be flushed. Accordingly, the concentration of TDS of water present on the non-filtration side 211 of the reverse osmosis filter 210 may be relatively low. Accordingly, the creepage phenomenon may not occur, or even when the creepage phenomenon occurs, water having a relatively low concentration of TDS may be present on the filtration side 212 of the reverse osmosis filter 210. Accordingly, water having a relatively low concentration of TDS may be provided to a user.

The control unit 400 may allow the non-filtration side 211 of the reverse osmosis filter 210 to be flushed in response to the time for which the water filtered by the filter unit 200 is discharged through the water outlet member 310 of the water outlet unit 300 or the amount of the water.

For example, the control unit 400 may close the water outlet valve VO and then may open the second flushing valve VF2. Also, the control unit 400 may open the second flushing valve VF2 in response to the time for which the water outlet valve VO is opened or the amount of water discharged through the water outlet member 310 of the water outlet unit 300.

FIG. 7 is a graph of changes in concentration of TDS on the non-filtration side of the reverse osmosis filter over time when water filtered by the reverse osmosis filter is discharged through the water outlet member of the water outlet unit in the water purifier according to the present disclosure, and changes in concentration of TDS on the non-filtration side of the reverse osmosis filter over time when the non-filtration side of the reverse osmosis filter after is flushed after water is discharged through the water outlet member.

As illustrated in FIG. 7, by flushing the non-filtration side 211 of the reverse osmosis filter 210 for the time for which water is discharged through the water outlet member 310, the concentration of TDS of the water present on the non-filtration side 211 of the reverse osmosis filter 210 may be lowered to the concentration of TDS of the initial discharge of the water outflow member 310. Accordingly, by flushing the non-filtration side 211 of the reverse osmosis filter 210 by opening the second flushing valve VF2 in response to the time for which the water outlet valve VO is opened or the amount of water discharged through the water outlet member 310 of the water outlet unit 300, the concentration of TDS of the water present on the non-filtration side 211 of the reverse osmosis filter 210 may become relatively low.

For example, the non-filtration side 211 of the reverse osmosis filter 210 may be flushed by opening the second flushing valve VF2 for one time or more to two times or less the time for which the water outlet valve VO is opened. Also, the second flushing valve VF2 may be opened to flush the non-filtration side 211 of the reverse osmosis filter 210 by one time or more to two times or less the amount of water discharged through the water outlet member 310 of the water outlet unit 300. In this case, when the non-filtration side 211 of the reverse osmosis filter 210 is flushed by opening the second flushing valve VF2 more than twice the time for which the water outlet valve VO is opened, a relatively large amount of water may be used for flushing the filtration side 211 of the reverse osmosis filter 210. Also, even when the second flushing valve VF2 is opened to flush the non-filtration side 211 of the reverse osmosis filter 210 by more than twice the amount of water discharged through the water outlet member 310 of the water outlet unit 300, a relatively large amount of water may be used for flushing the non-filtration side 211 of the reverse osmosis filter 210. Accordingly, it may be preferable to flush the non-filtration side 211 of the reverse osmosis filter 210 by opening the second flushing valve VF2 by one time or more to two times or less the time for which the water outlet valve VO is opened, or to open second flushing valve VF2 to flush the non-filtration side 211 of the reverse osmosis filter 210 by one time or more to two times or less the amount of water discharged through the water outlet member 310 of the water outlet unit 300.

Accordingly, after opening the second flushing valve VF2 to flush the non-filtration side 211 of the reverse osmosis filter 210, the control unit 400 may close the second flushing valve VF2. Thereafter, the control unit 400 may close the water inlet valve VI and may stop the driving of the water inlet pump PI.

### Another embodiment of water purifier

Hereinafter, another embodiment of the water purifier according to the present disclosure will be described with reference to FIG.

Here, another embodiment of the water purifier according to the present disclosure may be different from the water purifier according to the present disclosure described with reference to FIGS. 1 to 7 in that the residential water line LL may include the shut-off valve VS connected to the control unit 400 and the control unit 400 may close the shut-off valve VS when the first flushing valve VF1 is opened.

Accordingly, in the description below, the different configurations will be mainly described, and the other configurations may be replaced with the descriptions described with reference to FIGS. 1 to 7 above.

In another embodiment of the water purifier 100 according to the present disclosure, a shut-off valve VS connected to the control unit 400 may be provided in the residential water line LL. Also, when the first flushing valve VF1 is opened to flush the filtration side 212 of the reverse osmosis filter 210, the control unit 400 may close the shut-off valve VS. Accordingly, more water from the non-filtration side 211 of the reverse osmosis filter 210 may flow through the reverse osmosis membrane MB and may flow to the filtration side 212 of the reverse osmosis filter 210 and may flush the filtration side 212. Accordingly, the flushing of the filtration side 212 of the reverse osmosis filter 210 may be more properly performed.

As described above, when the water purifier according to the present disclosure is used, the filtration side of the reverse osmosis filter may be flushed before the water filtered by the filter unit is discharged through the water outlet member, and after the water filtered by the filter unit is discharged through the water outlet member, the non-filtration side of the reverse osmosis filter may be flushed, and water having a relatively low concentration of TDS may be supplied to a user.

## Claims

1. A method of controlling a water purifier (100) by a control unit (400) of the water purifier (100), the method comprising:
(a) flushing a filtration side (212) of a reverse osmosis filter (210) of a filter unit (200) of the water purifier (100) before water is discharged in step (b), wherein the reverse osmosis filter (210) includes a reverse osmosis membrane (MB) for filtering water such that the reverse osmosis filter (210) is partitioned into a non-filtration side (211) and the filtration side (212);
(b) discharging water filtered by the filter unit (200) to the outside through a water outlet member (310) of a water outlet unit (300) of the water purifier (100) connected to the filter unit (200); and
(c) flushing the non-filtration side (211) after water is discharged in step (b).

2. The method of claim 1,
wherein, in step (a), the filtration side (212) is flushed for a predetermined time.

3. The method of claim 1 or 2,
wherein, in step (c), the non-filtration side (211) is flushed in response to the time for which water filtered by the filter unit (200) is discharged through the water outlet member (310) or the amount of the water.

4. The method of any one of the preceding claims,
wherein the non-filtration side (211) is connected to a water inlet valve (VI) connected to the control unit (400), a water inlet line (LI) including a water inlet pump (PI), and a residential water line (LL) including a residential water valve (VL), and the filtration side (212) includes a water outlet valve (VO) connected to the control unit (400) and is connected to the water outlet member (310).

5. The method of claim 4,
wherein the water outlet line is connected to a first flushing line (FL1) including a first flushing valve (VF1) connected to the control unit (400), and the residential water line (LL) is connected to a second flushing line (FL2) including a second flushing valve (VF2) connected to the control unit (400).

6. The method of claim 5, insofar as dependent on claim 2,
wherein, in step (a), the water inlet valve (VI) is opened, and while the water inlet pump (PI) is driven, the first flushing valve (VF1) is opened for the predetermined time, and
wherein, in step (b), the first flushing valve (VF1) is closed and the water outlet valve (VO) is opened.

7. The method of claim 6,
wherein, in step (a), the first flushing valve (VF1) is opened for at least 5 seconds.

8. The method of claim 6 or 7,
wherein, in step (c), the water outlet valve (VO) is closed and then the second flushing valve (VF2) is opened.

9. The method of claim 8, insofar as dependent on claim 3,
wherein, in step (c), in response to the time for which the water outlet valve (VO) is opened or the amount of water discharged through the water outlet member (310) the second flushing valve is opened and then closed.

10. The method of claim 9,
wherein, in step (c), the second flushing valve (VF2) is closed and thereafter the water inlet valve (VI) is closed and the driving of the water inlet pump (PI) is stopped.

11. The method of any one of claims 6 to 11,
wherein the residential water line (LL) includes a shut-off valve (VS) connected to the control unit (400), and
wherein, in step (a), the shut-off valve (VS) is closed when the first flushing valve (VF1) is opened.

## Patentansprüche

1. Verfahren zur Steuerung eines Wasserreinigers (100) durch eine Steuereinheit (400) des Wasserreinigers (100), wobei das Verfahren umfasst:
(a) Spülen einer Filtrationsseite (212) eines Umkehrosmosefilters (210) einer Filtereinheit (200) des Wasserreinigers (100), bevor in Schritt (b) Wasser abgeleitet wird, wobei der Umkehrosmosefilter (210) eine Umkehrosmosemembran (MB) zum Filtern von Wasser beinhaltet, so dass der Umkehrosmosefilter (210) in eine Nicht-Filtrationsseite (211) und die Filtrationsseite (212) unterteilt ist;
(b) Ableiten von von der Filtereinheit (200) gefiltertem Wasser nach außen durch ein Wasserauslasselement (310) einer Wasserauslasseinheit (300) des Wasserreinigers (100), der mit der Filtereinheit (200) verbunden ist; und
(c) Spülen der Nicht-Filtrationsseite (211), nachdem das Wasser in Schritt (b) abgeleitet wurde.

2. Verfahren nach Anspruch 1,
wobei in Schritt (a) die Filtrationsseite (212) für eine vorgegebene Zeit gespült wird.

3. Verfahren nach Anspruch 1 oder 2,
wobei in Schritt (c) die Nicht-Filtrationsseite (211) in Abhängigkeit von der Zeit, während der das von der Filtereinheit (200) gefilterte Wasser durch das Wasserauslasselement (310) abgeleitet wird, oder von der Wassermenge gespült wird.

4. Verfahren nach einem der vorhergehenden Ansprüche,
wobei die Nicht-Filtrationsseite (211) mit einem Wassereinlassventil (VI), das mit der Steuereinheit (400) verbunden ist, einer Wassereinlassleitung (LI), die eine Wassereinlasspumpe (PI) beinhaltet, und einer Wohnwasserleitung (LL), die ein Wohnwasserventil (VL) beinhaltet, verbunden ist, und die Filtrationsseite (212) ein Wasserauslassventil (VO) beinhaltet, das mit der Steuereinheit (400) verbunden ist und mit dem Wasserauslasselement (310) verbunden ist.

5. Verfahren nach Anspruch 4,
wobei die Wasserauslassleitung mit einer ersten Spülleitung (FL1) verbunden ist, die ein erstes Spülventil (VF1) beinhaltet, das mit der Steuereinheit (400) verbunden ist, und die Wohnwasserleitung (LL) mit einer zweiten Spülleitung (FL2) verbunden ist, die ein zweites Spülventil (VF2) beinhaltet, das mit der Steuereinheit (400) verbunden ist.

6. Verfahren nach Anspruch 5, soweit von Anspruch 2 abhängig,
wobei in Schritt (a) das Wassereinlassventil (VI) geöffnet wird, und während die Wassereinlasspumpe (PI) angetrieben wird, das erste Spülventil (VF1) für die vorgegebene Zeit geöffnet wird, und
wobei in Schritt (b) das erste Spülventil (VF1) geschlossen und das Wasserauslassventil (VO) geöffnet wird.

7. Verfahren nach Anspruch 6,
wobei in Schritt (a) das erste Spülventil (VF1) für zumindest 5 Sekunden geöffnet wird.

8. Verfahren nach Anspruch 6 oder 7,
wobei in Schritt (c) das Wasserauslassventil (VO) geschlossen wird und dann das zweite Spülventil (VF2) geöffnet wird.

9. Verfahren nach Anspruch 8, soweit von Anspruch 3 abhängig,
wobei in Schritt (c) in Abhängigkeit von der Zeit, während der das Wasserauslassventil (VO) geöffnet ist, oder der Wassermenge, die durch das Wasserauslasselement (310) abgeleitet wird, das zweite Spülventil geöffnet und dann geschlossen wird.

10. Verfahren nach Anspruch 9,
wobei in Schritt (c) das zweite Spülventil (VF2) geschlossen wird und danach das Wassereinlassventil (VI) geschlossen wird und das Antreiben der Wassereinlasspumpe (PI) gestoppt wird.

11. Verfahren nach einem der Ansprüche 6 bis 11,
wobei die Wohnwasserleitung (LL) ein Absperrventil (VS) beinhaltet, das mit der Steuereinheit (400) verbunden ist,
wobei in Schritt (a) das Absperrventil (VS) geschlossen wird, wenn das erste Spülventil (VF1) geöffnet wird.

## Revendications

1. Procédé de commande d'un purificateur d'eau (100) par une unité de commande (400) dudit purificateur d'eau (100), ledit procédé comprenant :
(a) rinçage d'un côté filtrant (212) d'un filtre à osmose inverse (210) d'une unité de filtre (200) du purificateur d'eau (100) avant refoulement de l'eau lors de l'étape (b), ledit filtre à osmose inverse (210) comportant une membrane à osmose inverse (MB) pour le filtrage d'eau de sorte que ledit filtre à osmose inverse (210) est divisé en un côté non filtrant (211) et le côté filtrant (212) ;
(b) refoulement vers l'extérieur de l'eau filtrée par l'unité de filtre (200) via un élément de sortie d'eau (310) d'une unité de sortie d'eau (300) du purificateur d'eau (100) reliée à l'unité de filtre (200) ; et
(c) rinçage du côté non filtrant (211) après refoulement de l'eau lors de l'étape (b).

2. Procédé selon la revendication 1,
où, lors de l'étape (a), le côté filtrant (212) est rincé pendant une durée prédéterminée.

3. Procédé selon la revendication 1 ou la revendication 2,
où, lors de l'étape (c), le côté non filtrant (211) est rincé en réaction à la durée pendant laquelle l'eau filtrée par l'unité de filtre (200) est refoulée via l'élément de sortie d'eau (310) ou à la quantité d'eau.

4. Procédé selon l'une des revendications précédentes,
où le côté non filtrant (211) est relié à une vanne d'entrée d'eau (VI) reliée à l'unité de commande (400), à une conduite d'entrée d'eau (LI) comportant une pompe d'entrée d'eau (PI), et à une conduite d'eau résidentielle (LL) comportant une vanne d'eau résidentielle (VL), et le côté filtrant (212) comporte une vanne de sortie d'eau (VO) reliée à l'unité de commande (400), et est relié à l'élément de sortie d'eau (310).

5. Procédé selon la revendication 4,
où la conduite de sortie d'eau est reliée à une première conduite de rinçage (FL1) comportant une première vanne de rinçage (VF1) reliée à l'unité de commande (400), et la conduite d'eau résidentielle (LL) est reliée à une deuxième conduite de rinçage (FL2) comportant une deuxième vanne de rinçage (VF2) reliée à l'unité de commande (400).

6. Procédé selon la revendication 5, si dépendante de la revendication 2,
où, lors de l'étape (a), la vanne d'entrée d'eau (VI) est ouverte, et, pendant que la pompe d'entrée d'eau (PI) est entraînée, la première vanne de rinçage (VF1) est ouverte pendant la durée prédéterminée, et
où, lors de l'étape (b), la première vanne de rinçage (VF1) est fermée et la vanne de sortie d'eau (VO) est ouverte.

7. Procédé selon la revendication 6,
où, lors de l'étape (a), la première vanne de rinçage (VF1) est ouverte pendant au moins 5 secondes.

8. Procédé selon la revendication 6 ou la revendication 7,
où, lors de l'étape (c), la vanne de sortie d'eau (VO) est fermée, puis la deuxième vanne de rinçage (VF2) est ouverte.

9. Procédé selon la revendication 8, si dépendante de la revendication 3,
où, lors de l'étape (c), en réaction à la durée pendant laquelle la vanne de sortie d'eau (VO) est ouverte ou à la quantité d'eau refoulée par l'élément de sortie d'eau (310), la deuxième vanne de rinçage est ouverte puis fermée.

10. Procédé selon la revendication 9,
où, lors de l'étape (c), la deuxième vanne de rinçage (VF2) est fermée, puis la vanne d'entrée d'eau (VI) est fermée et l'entraînement de la pompe d'entrée d'eau (PI) est arrêté.

11. Procédé selon l'une des revendications 6 à 11,
où la conduite d'eau résidentielle (LL) comporte une vanne d'arrêt (VS) reliée à l'unité de commande (400), et
où, lors de l'étape (a), la vanne d'arrêt (VS) est fermée quand la première vanne de rinçage (VF1) est ouverte.
